# EUROPEAN PATENT SPECIFICATION

(11) **EP 2 066 720 B1**
(45) Date of publication and mention of the grant of the patent: **15.12.2010**
(21) Application number: 07803491.5
(22) Date of filing: 14.09.2007
(51) Int. Cl.: C08G 18/63, C08F 283/06, C08F 291/08

(54) **METHOD OF FORMING A GRAFT POLYOL AND POLYURETHANE ARTICLE FORMED FROM THE GRAFT POLYOL**
VERFAHREN ZUR BILDUNG EINES PROPFPOLYOLS UND AUS DEM PROPFPOLYOL GEBILDETER POLYURETHANGEGENSTAND
PROCÉDÉ DE FORMATION D'UN POLYOL GREFFÉ ET D'UN ARTICLE EN POLYURÉTHANE FORMÉ À PARTIR DU POLYOL GREFFÉ

(30) Priority: 14.09.2006 US 531784
(43) Date of publication of application: 10.06.2009
(73) Proprietor: BASF SE, 67056 Ludwigshafen (DE)
(72) Inventor: BORST, Joseph P., Plymouth, MI 48170 (US); SCHEFFLER, Gene M., Brownstown, MI 48173 (US)
(86) International application number: PCT/EP2007/059691
(87) International publication number: WO 2008/031884

(56) References cited:
- EP-A- 0 221 412
- US-A- 4 661 531
- US-A- 5 354 800
- US-A- 5 962 571

## Description

### FIELD OF THE INVENTION

The present invention generally relates to a graft polyol, a method of forming the graft polyol, and a polyurethane article formed from the graft polyol. More specifically, the method includes providing a chain transfer agent that includes less than five carbon atoms, at least one non-metal atom, and at least one hydrophilic moiety.

### DESCRIPTION OF THE RELATED ART

Conventional graft polyols, methods of forming the graft polyols, and polyurethane articles **(10)** formed from the graft polyols, are well known in the art. Typically, the methods include polymerizing monomers, to form polymers, in the presence of a carrier polyol, a chain transfer agent, and a free radical initiator, and thereby form the graft polyol. The carrier polyol provides a basis for the formation of the graft polyol. The chain transfer agent controls molecular weight and the size of the polymers without changing an overall rate of conversion of the polymerizable monomers to the polymers. The free radical initiator decomposes and forms free radicals which, through propagation, facilitate the polymerization of the monomers.

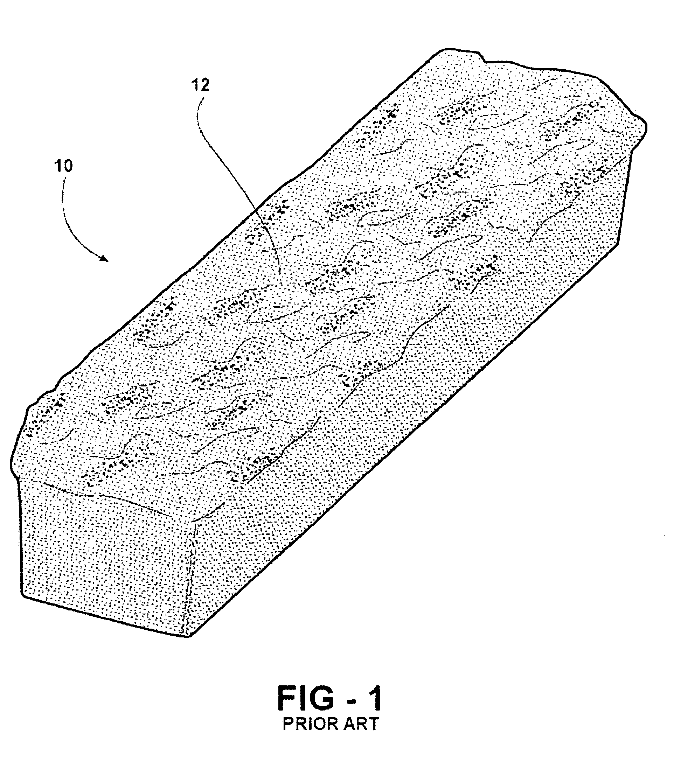

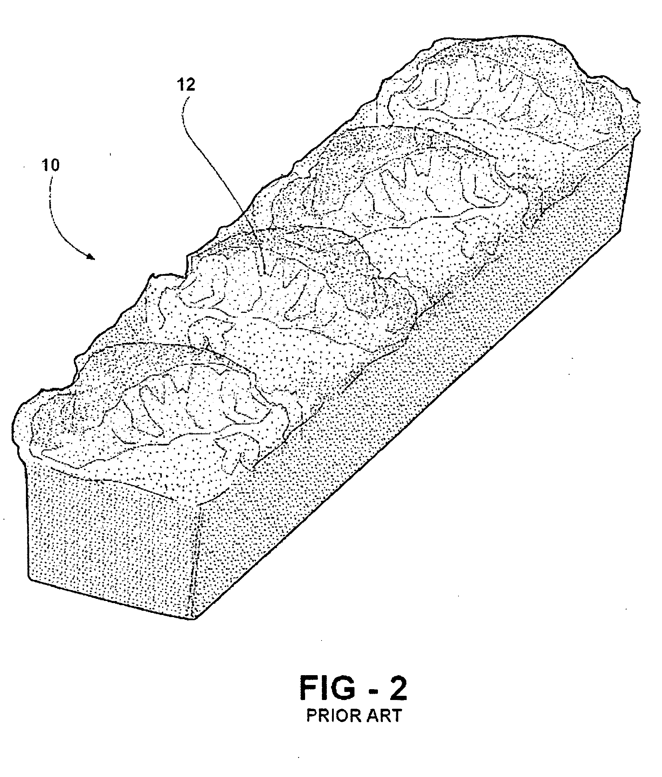

Common chain transfer agents such as alcohols and thiol hydrocarbons are most often utilized in the formation of the graft polyols and the polyurethane articles **(10).** Alcohols must be used in large quantities to be effective and must be recycled if they are to be economically used. One method of recycling alcohols is vacuum stripping which increases a time needed to form the graft polyols, (i.e., the cycle time), as compared to a time needed to form graft polyols when using the thiol hydrocarbons which do not require recycling. When polyurethane articles **(10)** are formed from the graft polyols in high solvent and high water foam formulations, the thiol hydrocarbons facilitate formation of rough and uneven surfaces **(12)** and also facilitate splitting/degradation of surfaces **(12),** of the polyurethane articles **(10),** as shown in Figures 1 and 2. Specifically, the thiol hydrocarbons include long carbon chains causing the thiol hydrocarbons to be hydrophobic. While an exact mechanism of splitting/degradation is not understood by those skilled in the art, it is believed that hydrophobic thiol hydrocarbons, incorporated into the graft polyol, cause the graft polyol to be incompatible with any water present thereby creating instability which facilitates the splitting/degradation of the surfaces **(12).** Conversely, the alcohols, although hydrophilic, are prohibitively expensive without recycling and, in comparison to thiol hydrocarbons, are less preferable for use in commercial processes as their use increases production costs and cycle times. Additionally, use of thiol hydrocarbons may increase odor of graft polyols and polyurethane articles **(10)** made from the graft polyols, as disclosed in U.S. Pat. No. 4,652,589.

U.S. Pat. No. 4,661,531 to Davis et al. disclose the preparation of graft polyols using 2-mercaptoethanol as chain transfer agent.

Chain transfer agents other than alcohols and thiol hydrocarbons are also known in the art and have been used in polymerization of monomers. U.S. Pat. No. 5,354,800 to Suzuki et al. discloses a method that utilizes a hydrophilic chain transfer agent, (e.g., 3-mercapto-1,2-propanediol or 2-mercaptoethanol) and a hydrophobic chain transfer agent, to polymerize monomers to form a polymer dispersion in water (i.e., a latex). However, neither the hydrophilic nor the hydrophobic chain transfer agents are utilized in formation of a graft polyol. In fact, the method of the '800 patent is specifically directed towards aqueous dispersions and not polyetherol dispersions. As graft polyols are not formed in aqueous dispersions, the method of the '800 patent is not suitable for application to forming graft polyols, to polyurethane articles **(10)** formed from the graft polyols, or to reducing splitting and degradation of surfaces **(12)** of the polyurethane articles **(10).**

U.S. Pat. No. 5,986,011 to Ellis et al. also discloses a method that utilizes chain transfer agents other than alcohols and thiol hydrocarbons. The method of the '011 patent, like the method of the '800 patent, utilizes a hydrophilic chain transfer agent, (3-mercapto-1,2-propanediol or 2-mercaptoethanol), and a hydrophobic chain transfer agent, in polymerization of monomers. Also like the '800 patent, neither the hydrophobic nor the hydrophilic chain transfer agent of the '011 patent is utilized in formation of graft polyols. Rather, the chain transfer agents of the '011 patent are utilized for polymerization of monomers in batch reactors to be used in acrylate pressure sensitive adhesive production. As such, this method is also not directly applicable to forming graft polyols, to polyurethane articles **(10)** formed from the graft polyols, or to reducing splitting and degradation of surfaces **(12)** of the polyurethane articles **(10).**

In addition to the chain transfer agents, free radical initiators are also used in polymerization of monomers, yet function in a different way than chain transfer agents, as first described above. U.S. Pat. No. 3,960,824 to Hicks discloses a method that utilizes a variety of sulfur compounds, (e.g., mercaptans) that function as free radical initiators and not as chain transfer agents in polymerization of monomers. The sulfur compounds of the '824 patent, acting as the free radical initiators, radicalize oxygen in the air to initiate polymerization of the monomers, but do not serve to control the molecular weight and size of the polymers and do not serve as chain transfer agents. As such, this method, as disclosed, does not address formation of graft polyols using chain transfer agents, polyurethane articles **(10)** formed from those graft polyols, or reducing splitting and degradation of surfaces **(12)** of the polyurethane articles **(10).**

Accordingly, there remains an opportunity to form a graft polyol with a minimized cycle time while utilizing a chain transfer agent that does not require expensive disposal and/or recycling. There also remains an opportunity to form a polyurethane article from the graft polyol that has a surface that does not have a tendency to split or degrade. Further, there remains an opportunity to utilize a low molecular weight chain transfer agent that does not impart a malodorous smell to a graft polyol and has the potential to react into a polyurethane network of a polyurethane article, thus potentially reducing emissions from the polyurethane article.

### SUMMARY OF THE INVENTION AND ADVANTAGES

The present invention provides a graft polyol and a method of forming the graft polyol. The method includes the steps of providing a polymerizable monomer and providing a chain transfer agent that includes from three to nine carbon atoms. The chain transfer agent also includes at least one thiol moiety, and at least one hydrophilic moiety selected from the group of a hydroxyl moiety, an amine moiety, and a carboxyl moiety. The method further includes the steps of providing a carrier polyol and providing a free radical initiator including free radicals. The method still further includes the step of combining the polymerizable monomer, the chain transfer agent, the carrier polyol, and the free radical initiator including the free radicals. The method also includes the step of reacting the polymerizable monomer and the free radicals to polymerize the polymerizable monomer and form the graft polyol. The present invention also provides a polyurethane article including the reaction product of an isocyanate component and the graft polyol formed from the method of the present invention.

The chain transfer agent used in formation of the graft polyol reduces a tendency of a surface of the polyurethane article to split and degrade. As the chain transfer agent has from 3 to 9 carbon atoms and at least one hydrophilic moiety, the chain transfer agent is not hydrophobic and does not cause the surface of the polyurethane article to split. The chain transfer agent also includes at least one thiol moiety which allows the chain transfer agent to effectively control the molecular weight and the size of a polymer formed from the polymerizable monomers. Additionally, the chain transfer agent is not expensive to dispose of or to recycle. The chain transfer agent also contributes to formation of the graft polyol with a minimized cycle time.

### BRIEF DESCRIPTION OF THE SEVERAL VIEWS OF THE DRAWINGS

Other advantages of the present invention will be readily appreciated, as the same becomes better understood by reference to the following detailed description when considered in connection with the accompanying drawings wherein:

Figure 1 is a top perspective view of a prior art polyurethane article having a surface exhibiting roughness and unevenness due to use of hydrophobic thiol hydrocarbons as chain transfer agents in formation of graft polyols used to form the prior art polyurethane article;

Figure 2 is a top perspective view of a prior art polyurethane article having a surface exhibiting splitting and degradation due to use of hydrophobic thiol hydrocarbons as chain transfer agents in formation of graft polyols used to form the prior art polyurethane article; and

Figure 3 is a top perspective view of an embodiment of a polyurethane article of the present invention formed from the graft polyol of the present invention and having a surface free of roughness, unevenness, splitting and degradation.

### DETAILED DESCRIPTION OF A PREFERRED EMBODIMENT

The present invention provides a graft polyol and a method of forming the graft polyol. The graft polyol may be any graft polyol known in the art and may include any solids content. Preferably, the graft polyol includes a solids content of less than or equal to 70, more preferably from 30 to 65, and most preferably from 40 to 60, percent. Particularly suitable graft polyols that may be formed from the method of the present invention include, but are not limited to, graft polyols commercially available from BASF Corporation of Wyandotte, MI, under the trade name of Pluracol^{®}.

. The method of forming the graft polyol includes the step of providing a polymerizable monomer. The polymerizable monomer may be any known in the art and, when polymerized, contributes to the solids content of the graft polyol. The polymerizable monomer may be provided in any amount but is preferably provided in an amount from 25 to 70 and more preferably from 30 to 65, parts by weight per 100 parts by weight of the graft polyol, to relate to the solids content described above. In one embodiment, the polymerizable monomer is selected from the group of styrenes, esters of acrylic and methacrylic acids, ethylenically unsaturated nitriles and amides, and combinations thereof. In another embodiment, the polymerizable monomer includes styrenes, ethylenically unsaturated nitriles and amides, and combinations thereof. In yet another embodiment, the polymerizable monomer includes styrene and acrylonitrile. In a further embodiment, the polymerizable monomer includes from 50 to 100, and more preferably from 50 to 85, parts by weight of the styrene per 100 parts by weight of the polymerizable monomer. In still a further embodiment, the polymerizable monomer includes from 15 to 100, and more preferably from 30 to 50, parts by weight of the acrylonitrile per 100 parts by weight of the polymerizable monomer.

Examples of the styrenes include, but are not limited to, styrene, *para*-methyl styrene, and combinations thereof. For descriptive purposes only, chemical structures of styrene and *para*-methyl styrene are each illustrated below. 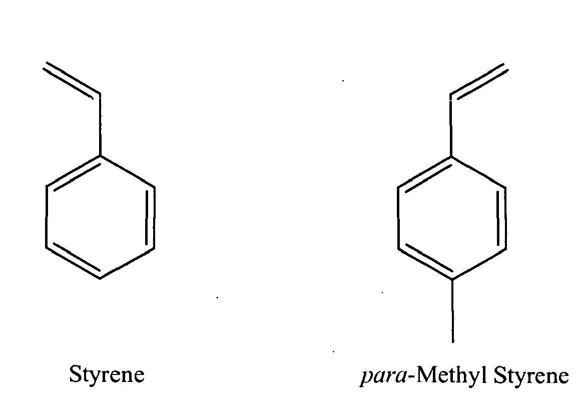 Examples of the ethylenically unsaturated nitriles and amides include, but are not limited to, acrylonitrile, methacrylonitrile, acrylamide, and combinations thereof. For descriptive purposes only, chemical structures of acrylonitrile, methacrylonitrile, and acrylamide are also each illustrated below.

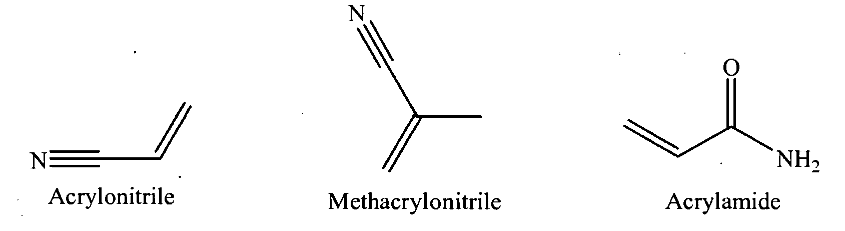

The method also includes the step of providing a chain transfer agent. It is to be appreciated that, in the present invention, the chain transfer agent functions as a reaction moderator, as is known in the art. The chain transfer agent includes from 3 to 9 carbon atoms, at least one thiol moiety, and at least one hydrophilic moiety selected from the group of a hydroxyl moiety, an amine moiety, and a carboxyl moiety. The chain transfer agent contributes to formation of the graft polyol in a minimized cycle time, which will be described in greater detail below. If the graft polyol is used to form a polyurethane article **(14),** also described in greater detail below, the chain transfer agent reduces a tendency of a surface **(16)** of the polyurethane article **(14)** to split and/or degrade. The chain transfer agent may be provided in any amount and is preferably provided in an amount from 0.4 to 2 and more preferably in an amount from 0.6 to 1.55, parts by weight per 100 parts by weight of the polymerizable monomer. Without intending to be bound by any particular theory, it is believed that because the chain transfer agent has at least one hydrophilic moiety, the chain transfer agent is not hydrophobic and thus the graft polyol is more compatible with polyurethane articles **(14)** made with high water levels. It is also believed that because the chain transfer agent includes at least one thiol moiety, the chain transfer agent can effectively control the molecular weight and the size of a polymer formed from the polymerizable monomers. Additionally, it is believed that the chain transfer agent contributes to formation of the graft polyol in a minimized cycle time as a minimum amount of vacuum stripping may be utilized, as described in greater detail below.

In one embodiment, the chain transfer agent is selected from the group of mercaptocarboxylic acids, hydroxylmercaptans, aminomercaptans, carboxylsulfides, sulfide acid anhydrides, salts thereof, and combinations thereof. Examples of suitable mercaptocarboxylic acids include, but are not limited to, 2-mercaptopropionic acid, 3-mercaptopropionic acid, mercaptosuccinic acid, and combinations thereof. For descriptive purposes only, a chemical structure of a mercaptocarboxylic acid is illustrated below. However, for purposes of the present invention, the mercaptocarboxylic acid is not limited to the chemical structure below. 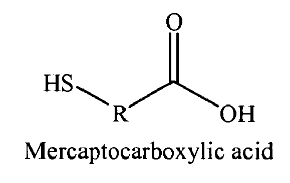 In this chemical structure, R may include from 2 to 8 carbon atoms.

Examples of a suitable hydroxylmercaptan include, but are not limited to, 3-mercapto-1,2-propanediol, 3,4-dimethyl-7-mercapto-3,4-heptanediol, 6-mercapto-2,5-dimethyl-1,2-hexanediol, 6-mercapto-1,2-hexanediol, 4-mercapto-1-butanol, 6-mercapto-1-hexanol, 4-mercapto-1,2-butanediol, 2-mercapto-3-butanol, 3-mercapto-2-butanol, 1-mercapto-2-propanol, 3-mercapto-1-propanol, and combinations thereof. For descriptive purposes only, a chemical structure of a hydroxylmercaptan is illustrated below. However, for purposes of the present invention, the hydroxylmercaptan is not limited to the chemical structure below.

SH-R-OH

Hydroxylmercaptan
In this chemical structure, R may include from three to nine carbon atoms and may include a second hydroxyl group.
For descriptive purposes only, a chemical structure of 3-mercapto-1,2-propanediol is illustrated below.

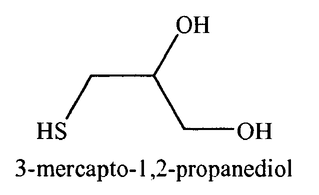

For descriptive purposes only, a chemical structure of an aminomercaptan is illustrated below. However, for purposes of the present invention, the aminomercaptan is not limited to the chemical structure below.

SH-R-NH₂

Aminomercaptan
In this chemical structure, R may include from three to nine carbon atoms.

Examples of suitable carboxylsulfides include, but are not limited to, hexyl mercaptoacetate, isopentyl mercaptoacetate, isopropyl mercaptoacetate, ethyl thioglycolate, methyl thioglycolate, and combinations thereof. For descriptive purposes only, a chemical structure of a carboxylsulfide is illustrated below. However, for purposes of the present invention, the carboxylsulfide is not limited to the chemical structure below. 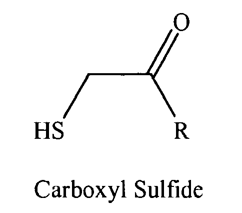 In this chemical structure, R may include any organic moiety having from 1 to 7 carbon atoms.

An example of a suitable sulfide acid anhydride includes, but is not limited to, thiodiglycolic anhydride. For descriptive purposes only, a chemical structure of a sulfide acid anhydride is illustrated below. However, for purposes of the present invention, the sulfide acid anhydride is not limited to the chemical structure below. 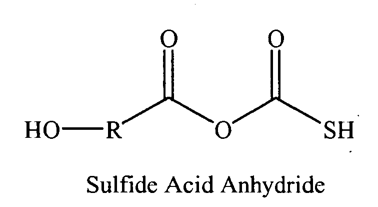 In this chemical structure, R may include from one to seven carbon atoms.

Referring back to the method, the method further includes the step of providing a carrier polyol. The carrier polyol may be any known in the art and preferably is selected from the group of polyether polyols, polyester polyols, polycarbonate polyols, and combinations thereof. The carrier polyol preferably serves as a "solvent" for the polymerizable monomer, dissolving the polymerizable monomer such that the polymerizable monomer can react and polymerize. The carrier polyol also preferably serves as a carrier for the free radical initiator. Preferably, the carrier polyol is provided in an amount from 20 to 75 and more preferably from 45 to 60, parts by weight per 100 parts by weight of the graft polyol. Particularly suitable carrier polyols are commercially available from BASF Corporation of Wyandotte, MI, under the trade name of Pluraco^{®}.

The method also includes the step of providing a free radical initiator including free radicals. The free radical initiator may be any known in the art. In one embodiment, the free radical initiator is selected from the group of peroxides, peroxy esters, trioxides, tetroxides, azo compounds, polyphenylhydrocarbons, hydrazines, alkoxyamines, nitrates, nitrites, disulfides, polysulfides, organometallics, and combinations thereof.

In another embodiment, the free radical initiator includes the peroxide. The peroxide may include the general formula -OO-. The peroxide may alternatively include the general formula: 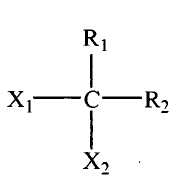 wherein each of R₁ and R₂ comprises one of an alkyl group, an oxygen-alkyl group and an oxygen-oxygen-alkyl group, X₁ comprises one of an ester group, an oxygen, and an alkyl group, and X₂ comprises a methyl group so long as X₁ is an ester group. More preferably, the peroxide includes monoperoxycarbonates, peroxyketals, and combinations thereof.

In yet another embodiment, the free radical initiator has diimide functionality, i.e., the free radical initiator is an "azo" free radical initiator. In this embodiment, the free radical initiator preferably includes 2,2'-azobis(2-methylbutanenitrile) that is commercially available from Akzo Nobel under the trade name of AMBN-gr. The free radical initiator is preferably provided in an amount from 0.1 to 3 and more preferably from 0.3 to 1, parts by weight per 100 parts by weight of the polymerizable monomer. For descriptive purposes only, a chemical structure of 2,2'-azobis(2-methylbutanenitrile) is shown below.

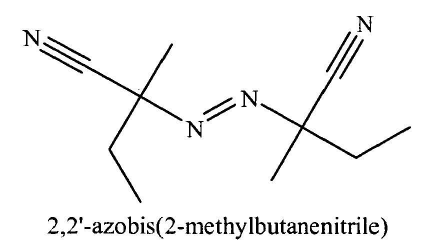

The method may further include the step of providing a macromer polyol that is different from the carrier polyol. The macromer polyol may be any known in the art and preferably is selected from the group of polyether polyols, polyester polyols, polycarbonate polyols, and combinations thereof. Particularly suitable macromer polyols, like the carrier polyols, are also commercially available from BASF Corporation of Wyandotte, MI, under the trade name of Pluracol^{®}. The macromer polyol differs from the carrier polyol in that the macromer polyol typically has a higher number average molecular weight than the carrier polyol. If the method includes the step of providing the macromer polyol, the macromer polyol is preferably provided in an amount from 2 to 10, and more preferably from 4 to 8, parts by weight per 100 parts by weight of the polymerizable monomer.

The method may still further include the step of providing a seed polyol that is different from the carrier polyol and the macromer polyol. The seed polyol is preferably a graft polyol that is different from the graft polyol of the present invention. If a graft polyol, the seed polyol may have any solids content. Preferably, the seed polyol has a solids content from 30 to 55 and more preferably from 40 to 50, percent. Particularly suitable seed polyols, like the carrier polyol and the macromer polyol, are also commercially available from BASF Corporation of Wyandotte, MI, under the trade name of Pluracol^{®}. If the method includes the step of providing the seed polyol, the seed polyol is preferably provided in an amount from 5 to 90, and more preferably from 10 to 40, parts by weight per 100 parts by weight of the polymerizable monomer. It is to be appreciated that, in one embodiment, depending on when and if the carrier polyol and the macromer polyol are provided, the carrier polyol and the macromer polyol may be functionally equivalent.

The method still further includes the step of combining the polymerizable monomer, the chain transfer agent, the carrier polyol, and the free radical initiator including the free radicals. Without intending to be limited by any particular theory, it is believed that the free radical initiator decomposes to form at least one free radical, as generically shown below.

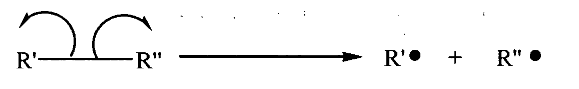

The polymerizable monomer, the chain transfer agent, the carrier polyol, and the free radical initiator may be combined in any order, at any temperature, and at any pressure. In one embodiment, the step of combining is further defined as combining the carrier polyol and the free radical initiator prior to combining the polymerizable monomer, the chain transfer agent, the carrier polyol, and the free radical initiator. In another embodiment, the step of combining further is further defined as combining the polymerizable monomer and the chain transfer agent prior to combining the polymerizable monomer, the chain transfer agent, the carrier polyol, and the free radical initiator. Preferably, each of the polymerizable monomer, the chain transfer agent, the carrier polyol, and the free radical initiator are combined in a reaction vessel. The reaction vessel may have any size and may be any known in the art that is suitable for use.

Preferably, the step of combining the polymerizable monomer, the chain transfer agent, the carrier polyol, and the free radical initiator is further defined as combining at a temperature from 80°C to 155°C, more preferably from 115°C to 145°C, and most preferably from 120°C to 130°C. Also, the step of combining is preferably further defined as combining at pressure of less than 20 psi, and most preferably at atmospheric pressure. The polymerizable monomer, the chain transfer agent, the carrier polyol, and the free radical initiator may also be combined over any amount of time.

As first introduced above, if the method includes the step of providing the seed polyol and/or the macromer polyol, the method may also include the steps of combining the seed polyol and/or the macromer polyol, the polymerizable monomer, the chain transfer agent, the carrier polyol, and the free radical initiator. If so, the seed polyol and/or the macromer polyol, the polymerizable monomer, the chain transfer agent, the carrier polyol, and the free radical initiator may be combined in any order, at any temperature, at any pressure, and over any amount of time.

In one embodiment, a "reactor charge" is formed and includes first amount of the macromer polyol and a first amount of the carrier polyol combined with the seed polyol at a temperature of 125°C, at atmospheric pressure, in a reactor. In this embodiment, a "monomer charge" is also formed and includes the polymerizable monomer and the chain transfer agent combined in an auxiliary vessel and added at atmospheric pressure, and over a time of 180 minutes to a reactor with the "reactor charge" at a temperature of 125°C. Additionally, in this embodiment, an "initiator charge" is formed and includes a second amount of the carrier polyol combined with the free radical initiator in a second auxiliary vessel and added at atmospheric pressure and over a time of 198 minutes to a reactor with the "reactor charge" at a temperature of 125°C. In this embodiment, the "reactor charge," the "monomer charge," and the "initiator charge" may be formed in any order and after formation, the "monomer charge" and the "initiator charge" are preferably added to the reactor with the "reactor charge." However, the "reactor charge," the "monomer charge," and the "initiator charge" may be added together and combined in any order. Finally, in this embodiment, an additional amount of the macromer polyol is introduced into the reactor, preferably in a "macromer stream," at a temperature of 125°C, at atmospheric pressure, and over a time of 5 to 100 minutes.

Referring back to the method, after the polymerizable monomer, the chain transfer agent, the carrier polyol, and the free radical initiator are combined, the method also includes the step of reacting the polymerizable monomer and the free radicals to polymerize the polymerizable monomer and form the graft polyol. Without intending to be limited by any particular theory, it is believed that the free radical initiator decomposes to form at least one radical, as first introduced above. Specifically, if the free radical initiator includes diimide functionality, i.e., is an azo compound, the diimide functionality is believed to decompose to form molecular nitrogen (N₂) and two radicals, as shown below. 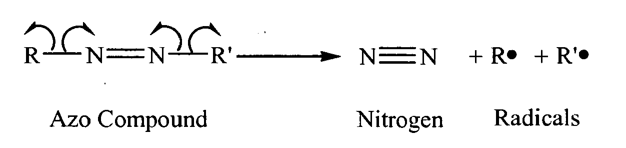 It is also believed that at least one of the two radicals reacts with the polymerizable monomer, thereby radicalizing the polymerizable monomer and breaking a carbon-carbon double bond in the polymerizable monomer to form a radicalized polymerizable monomer, as shown below. 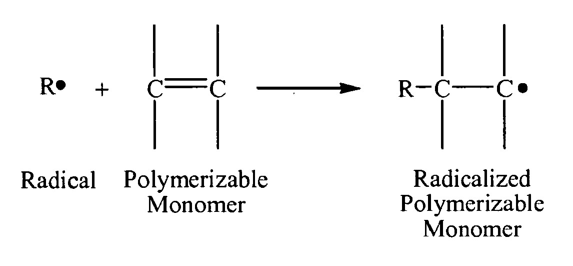 The radicalized polymerizable monomer is then believed to react with a second and/or subsequent polymerizable monomer to form a polymer, through propagation, as shown below, wherein z may be any integer. 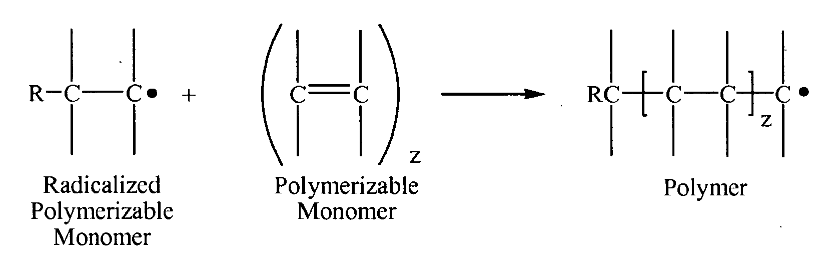 However, the polymer may have any number average molecular weight, and may have a number average molecular weight of over two million Daltons, as determined by one skilled in the art depending on desired application.

During propagation, the chain transfer agent is believed to interact with the radical terminated polymer thereby stopping additional polymerizable monomers from polymerizing and controlling the molecular weight and size of the polymer. Specifically, if the chain transfer agent includes the 3-mercapto-1,2-propanediol, a sulfur-hydrogen bond of the 3-mercapto-1,2-propanediol is believed to homolytically cleave thereby transferring the radical from the polymer, wherein z may be any integer, to the sulfur atom, as shown below, to form a sulfur radical.

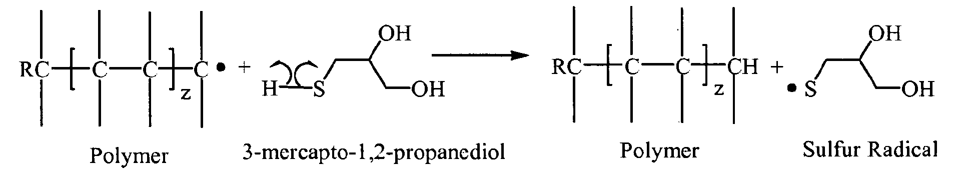

If the chain transfer agent includes the 3-mercapto-1,2-propanediol and the sulfur radical is formed, the sulfur radical may decompose or react with a second sulfur radical to form 3,3'-disulfanediyldipropane-1,2-diol, as also shown below.

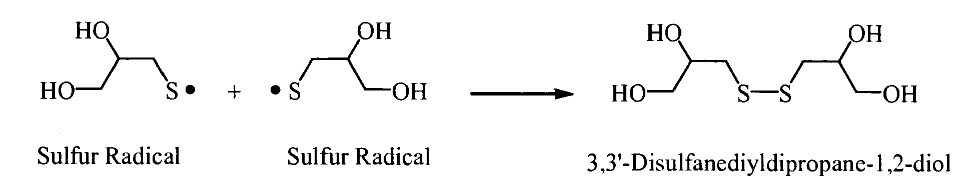

Referring back to the method, the method preferably includes the step of separating the polymerizable monomer from the graft polyol, known in the art as "stripping". Preferably, the step of separating is further defined as the step of applying a vacuum to separate the polymerizable monomer from the graft polyol. However, the step of separating may be accomplished by any suitable method known in the art.

Referring now to cycle time, cycle time is a manufacturing time measured from a start of a reaction to form a first batch of the graft polyol to a time when the reaction can be started again to form a second batch of the graft polyol. As is known by those in the art, cycle time may also be defined as a total time industrial machinery used to make the graft polyol is being utilized. In the present invention, if the method includes the step of separating the polymerizable monomer from the graft polyol, then this step is preferably included in the cycle time. Specifically, use of the chain transfer agent of the present invention minimizes a stripping time and thereby also minimizes a cycle time.

The present invention also provides the polyurethane article **(14)** formed from the method of the present invention, as first introduced above. The polyurethane article **(14)** includes a reaction product of an isocyanate component and the graft polyol of the present invention. It is also contemplated that the polyurethane article **(14)** may include the reaction product of the isocyanate component, the graft polyol of the present invention, and an additional polyol, such as a polyetherol. Non-limiting examples of suitable additional polyols include Pluracol^{®} TP740 and Pluracol^{®} GP730, both commercially available from BASF Corporation of Wyandotte, MI. However, it is contemplated that any polyol known in the art may be used as the additional polyol.

The isocyanate component may include any isocyanate known in the art including, but not limited to isocyanates, polyisocyanates, biurets of isocyanates and polyisocyanates, isocyanurates of isocyanates and polyisocyanates, and combinations thereof. In one embodiment of the present invention, the isocyanate component includes an n-functional isocyanate. In this embodiment, n is a number preferably from 2 to 5, more preferably from 2 to 4, and most preferably from 3 to 4. It is to be understood that n may be an integer or may have intermediate values from 2 to 5. The isocyanate component may include an isocyanate selected from the group of aromatic isocyanates, aliphatic isocyanates, and combinations thereof. In one embodiment, the isocyanate component includes an aliphatic isocyanate. If the isocyanate component includes an aliphatic isocyanate, the isocyanate component may also include a modified multivalent aliphatic isocyanate, i.e., a product which is obtained through chemical reactions of aliphatic diisocyanates and/or aliphatic polyisocyanates. Examples include, but are not limited to, ureas, biurets, allophanates, carbodiimides, uretonimines, isocyanurates, urethane groups, dimers, trimers, and combinations thereof. The isocyanate component may also include, but is not limited to, modified diisocyanates employed individually or in reaction products with polyoxyalkyleneglycols, diethylene glycols, dipropylene glycols, polyoxyethylene glycols, polyoxypropylene glycols, polyoxypropylenepolyoxethylene glycols, polyesterols, polycaprolactones, and combinations thereof.

Alternatively, the isocyanate component may include an aromatic isocyanate. If the isocyanate component includes an aromatic isocyanate, the aromatic isocyanate may correspond to the formula R'(NCO)_{z} wherein R' is a polyvalent organic radical which is aromatic and z is an integer that corresponds to the valence of R'. Preferably, z is at least two. If the isocyanate component includes the aromatic isocyanate, the isocyanate component may include, but is not limited to, the tetramethylxylylene diisocyanate (TMXDI), 1,4-diisocyanatobenzene, 1,3-diisocyanato-o-xylene, 1,3-diisocyanato-*p*-xylene, 1,3-diisocyanato-*m*-xylene, 2,4-diisocyanato-1-chlorobenzene, 2,4-diisocyanato-1-nitro-benzene, 2,5-diisocyanato-1-nitrobenzene, *m-*phenylene diisocyanate, *p*-phenylene diisocyanate, 2,4-toluene diisocyanate, 2,6-toluene diisocyanate, mixtures of 2,4- and 2,6-toluene diisocyanate, 1,5-naphthalene diisocyanate, 1-methoxy-2,4-phenylene diisocyanate, 4,4'-diphenylmethane diisocyanate, 2,4'-diphenylmethane diisocyanate, 4,4'-biphenylene diisocyanate, 3,3'-dimethyl-4,4'-diphenylmethane diisocyanate, 3,3'-dimethyldiphenylmethane-4,4'-diisocyanate, triisocyanates such as 4,4',4"-triphenylmethane triisocyanate polymethylene polyphenylene polyisocyanate and 2,4,6-toluene triisocyanate, tetraisocyanates such as 4,4'-dimethyl-2,2'-5,5'-diphenylmethane tetraisocyanate, toluene diisocyanate, 2,2'-diphenylmethane diisocyanate, 2,4'-diphenylmethane diisocyanate, 4,4'-diphenylmethane diisocyanate, polymethylene polyphenylene polyisocyanate, corresponding isomeric mixtures thereof, and combinations thereof. Alternatively, the aromatic isocyanate may include a triisocyanate product of *m*-TMXDI and 1,1,1-trimethylolpropane, a reaction product of toluene diisocyanate and 1,1,1-trimethyolpropane, and combinations thereof.

The isocyanate component may have any % NCO content and any viscosity. The isocyanate component may also react with the graft polyol in any amount, as determined by one skilled in the art. Preferably, the isocyanate and the resin composition reacted at an isocyanate index from 90 to 115, more preferably from 95 to 105, and most preferably from 98 to 102.

The graft polyol and/or isocyanate component may also include an additive selected from the group of chain extenders, anti-foaming agents, processing additives, plasticizers, chain terminators, surface-active agents, adhesion promoters, flame retardants, anti-oxidants, water scavengers, fumed silicas, dyes, ultraviolet light stabilizers, fillers, thixotropic agents, silicones, amines, transition metals, catalysts, blowing agents, surfactants, cross-linkers, inert diluents, chain extenders, flame retardants, and combinations thereof. The additive may be included in any amount as desired by those of skill in the art.

In one embodiment, the graft polyol includes one silicone additive, two amine additives, one flame retardant, and one tin additive. In this embodiment, the silicone additive is available from GE Silicones of Wilton, CT under the trade names of Niax^{®} L-620. Additionally, the two amine catalysts are available from Air Products and Chemicals, Inc. of Allentown, PA, and GE Silicones of Wilton, CT, under the trade names of DABCO^{®} 33LV, Niax^{®}A-1, respectively. Further, the flame retardant is commercially available from Albemarle Corporation of Baton Rouge, LA, under the trade name of AB 195. Still further, the tin additive is commercially available from Air Products and Chemicals, Inc. of Allentown, PA, under the trade name of T-10.

In another embodiment, the graft polyol includes one silicone additive, one amine additive, one flame retardant, and one tin additive. In this embodiment, the silicone additive is available from Goldschmidt AG, a division of Degussa Corporation of Parsippany, NJ, under the trade name of Silicon Tegostab^{®} BF2370. Additionally, the one amine catalyst is DABCO^{®} 33LV. Further, the flame retardant is commercially available from Albemarle Corporation of Baton Rouge, LA, under the trade name of AB100. Still further, the tin additive is T-10.

The polyurethane article **(14)** is preferably a flexible foam. If a flexible foam, the polyurethane article **(14)** may be used in a wide variety of industries including, but not limited to, in building and automotive supplies. It is also contemplated that the polyurethane article **(14)** may be a rigid foam.

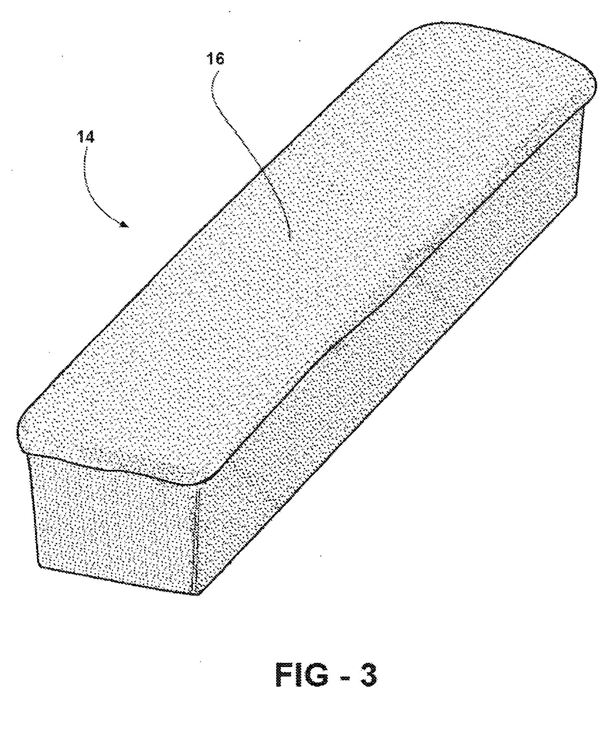

The polyurethane article **(14)** also has a surface **(16),** as first introduced above. In one embodiment, the surface **(16)** of the polyurethane article **(14)** is not rough, uneven, split or degraded, as shown in Figure 3. The surface **(16)** is believed to resist becoming rough and uneven and to resist splitting and degradation due to the chain transfer agent of the present invention.

### EXAMPLES

A graft polyol, Graft Polyol 1, is formed according to the method of the present invention. A comparative graft polyol, Comparative Graft Polyol 1 is also formed but is not formed utilizing the Chain Transfer Agent of the present invention.

Specifically, to form the Graft Polyol 1, a "Monomer Charge" is formed and includes approximately 275 grams of Acrylonitrile and approximately 550 grams of Styrene, serving as two Polymerizable Monomers, and approximately 8 grams of 3-Mercapto-1,2-propanediol, as a Chain Transfer Agent, combined in a first auxiliary reservoir, as set forth in Table 1. Additionally, an "Initiator Charge" is also formed and includes approximately 490 grams of a Carrier Polyol and approximately 4 grams of a Free Radical Initiator combined and added to a second auxiliary reservoir, also set forth in Table 1. Further, a "Reactor Charge" is formed and includes approximately 62 grams of a Macromer Polyol, approximately 460 additional grams of the Carrier Polyol, and approximately 154 grams of a Seed Polyol, added to a reactor, heated to 125°C, and stirred at a rate of 300 RPM, as further set forth in Table 1. After formation of the "Reactor Charge," the "Monomer Charge" and the "Initiator Charge" are added to the "Reactor Charge" in the reactor, heated to 125°C, and stirred at a rate of 300 RPM to begin forming the Graft Polyol 1. After one hour, the rate of stirring is increased to 400 RPM to still further continue forming the Graft Polyol 1. After 1 hour and 40 minutes, the rate of stirring is increased to 500 RPM to finish forming the Graft Polyol 1. After the Graft Polyol 1 is formed, the Graft Polyol 1 is vacuum stripped for 30 minutes to separate a residual amount of the Acrylonitrile and the Styrene from the Graft Polyol 1.

To form the Comparative Graft Polyol 1, the "Monomer Charge," the "Initiator Charge," the "Reactor Charge," and the "Macromer Stream" are utilized in the same amounts and in the same way as each is used to form the Graft Polyol 1, set forth above. However, to form the Comparative Graft Polyol 1, the 3-Mercapto-1,2-propanediol as the Chain Transfer Agent in the "Monomer Charge" used to form Polyol 1, is replaced with 1-Dodecanethiol, as set forth in Table 1. Additionally, the Comparative Graft Polyol 1 is also vacuum stripped for 30 minutes to separate residual amounts of the Acrylonitrile and the Styrene from the Comparative Graft Polyol 1. In Table 1, all components are in grams unless otherwise noted.

**TABLE 1**

| | | **Graft Polyol 1** | **Comparative Graft Polyol 1** |
|---|---|---|---|
| **Monomer Charge** | | | |
| | Styrene | 550 | 550 |
| | Acrylonitrile | 275 | 275 |
| | 3-Mercapto-1,2-propanediol | 8.25 | 0 |
| | 1-Dodecanethiol | 0 | 12.4 |
| **Initiator Charge** | | | |
| | Carrier Polyol | 491 | 489 |
| | Free Radical Initiator | 3.95 | 3.95 |
| **Reactor Charge** | | | |
| | Carrier Polyol | 460 | 458 |
| | Macromer Polyol | 62 | 62 |
| | Seed Polyol | 154 | 154 |

Styrene and Acrylonitrile are commercially available from Sigma Aldrich Corporation of St. Louis, MO.

3-Mercapto-1,2-propanediol is commercially available from Sigma Aldrich Corporation of St. Louis, MO under the trade name of 1-thioglycerol.

1-Dodecanethiol is commercially available from Sigma Aldrich Corporation of St. Louis, MO.

Carrier Polyol, commercially available from BASF Corporation of Wyandotte, MI, is a glycerine-initiated propylene oxide, ethylene oxide adduct and has a hydroxyl number of 56 and a number average molecular weight of about 2000 g/mol.

Free Radical Initiator is commercially available from Akzo Nobel of Amhem, Netherlands under the trade name of AMBN-gr and includes 2,2'-azobis(2-methylbutanenitrile).

Macromer Polyol, commercially available from BASF Corporation of Wyandotte, MI, is derived from a sorbitol-initiated propylene oxide, ethylene oxide adduct and has a hydroxyl number of 18 and a number average molecular weight of about 6,000 g/mol

Seed polyol, commercially available from BASF Corporation of Wyandotte, MI, is a 43.5 wt % acrylonitrile/styrene dispersion in Carrier Polyol having a viscosity of 4,500 centipoise at 25°C.

After formation, the Graft Polyol 1 and the Comparative Graft Polyol 1 are utilized to form polyurethane articles. Specifically, Graft Polyol I is utilized to form Articles 1. Comparative Graft Polyol 1 is used to form Comparative Article 1.

To form Article 1, 247.5 grams of the Graft Polyol 1 are combined with 52.5 grams of a Polyetherol 1, 179 grams of the Isocyanate, and the series of additives, as also set forth in Table 2 below. The Graft Polyol 1, Polyetherol 1, Isocyanate, and additives are mixed at 1500 RPM and poured into a cup to cure to form the Article 1. After curing, the Article 1 is visually evaluated for splitting/degradation.

To form Comparative Article 1, 247.5 grams of the Comparative Graft Polyol 1 are combined with 52.5 grams of the Polyetherol 1, 179 grams of the Isocyanate, and the series of additives, as also set forth in Table 2 below. The Comparative Graft Polyol 1, Polyetherol 1, Isocyanate, and additives are also mixed at 1500 RPM and poured into a cup to cure to form the Comparative Article 1. After curing, the Comparative Article 1 is also visually evaluated for splitting/degradation.

**TABLE 2**

| | **Article 1** | **Comparative Article 1** |
|---|---|---|
| Graft Polyol 1 | 247.5 | 0 |
| Comparative Graft Polyol 1 | 0 | 247.5 |
| Polyetherol 1 | 52.5 | 52.5 |
| Silicone Additive | 2.4 | 2.4 |
| Amine Additive 1 | 0.3 | 0.3 |
| Water | 15.45 | 15.45 |
| Flame Retardant | 45 | 45 |
| Tin Additive 1 | 1.08 | 1.08 |
| Isocyanate | 179 | 179 |
| Isocyanate Index | 121 | 121 |
| Visual Evaluation (Splitting/ Degradation) | No | Yes |

Polyetherol is commercially available from BASF Corporation of Wyandotte, MI, under the trade name of Pluracol^{®} GP 730, and includes a hydroxyl number of 229.5 mg KOH/g and a nominal functionality of 2.99.

Silicone Additive 1 is commercially available from Goldschmidt AG, a division of Degussa Corporation ofParsippany, NJ, under the trade name of Silicon Tegostab^{®} BF2370.

Amine Additive 1 is commercially available from Air Products and Chemicals, Inc. of Allentown, PA, under the trade name of DABCO^{®} 33LV.

Flame Retardant is commercially available from Albemarle Corporation of Baton Rouge, LA, under the trade name of AB100.

Tin Additive 1 is commercially available from Air Products and Chemicals, Inc. of Allentown, PA, under the trade name of T-10.

Isocyanate is toluene diisocyanate and is commercially available from BASF Corporation of Wyandotte, MI, under the trade name of Lupranate^{®} T-80.

The Isocyanate Index for the present invention is defined as 100 times the ratio of the number of isocyanate (NCO) groups in the isocyanate to the number of hydroxyl (OH) groups in the Graft Polyol 1, the Comparative Graft Polyol 1, and/or the Polyetherol 1, depending on which Graft Polyols/Polyetherols are utilized, as is known in the art.

The Articles 1 does not exhibit splitting/degradation as determined through visual evaluation. Conversely, the Comparative Article 1 does exhibit splitting/degradation as determined through visual evaluation. Specifically, splitting/degradation, for purposes of the present invention, includes a breaking, a separation into parts, and/or a lengthwise division, of a surface of the Comparative Article 1. As the Articles I does not exhibit and splitting/degradation, it is suitable for use in commercial applications in building and automotive supplies, while the Comparative Articles 1 is not suitable.

The invention has been described in an illustrative manner, and it is to be understood that the terminology which has been used is intended to be in the nature of words of description rather than of limitation.

## Claims

1. A method of forming a graft polyol, said method comprising the steps of:
a) providing a polymerizable monomer;
b) providing a chain transfer agent comprising;
1) from three to nine carbon atoms,
2) at least one thiol moiety, and
3) at least one hydrophilic moiety selected from the group of a hydroxyl moiety, an amine moiety, and a carboxyl moiety;
c) providing a carrier polyol;
d) providing a free radical initiator comprising free radicals;
e) combining the polymerizable monomer, the chain transfer agent, the carrier polyol, and the free radical initiator comprising the free radicals; and
f) reacting the polymerizable monomer and the free radicals to polymerize the polymerizable monomer and form the graft polyol.

2. A method as set forth in claim 1 wherein the chain transfer agent is selected from the group of mercaptocarboxylic acids, hydroxylmercaptans, aminomercaptans, carboxylsulfides, sulfide acid anhydrides, salts thereof, and combinations thereof.

3. A method as set forth in claim 2 wherein the chain transfer agent is 3-mercapto-1,2-propanediol.

4. A method as set forth in claim 1 wherein the polymerizable monomer is selected from the group of styrenes, esters of acrylic and methacrylic acids, ethylenically unsaturated nitriles and amides, and combinations thereof.

5. A method as set forth in claim 1 wherein the carrier polyol is selected from the group of polyether polyols, polyester polyols, polycarbonate polyols, and combinations thereof.

6. A method as set forth in claim 1 wherein the free radical initiator has azo functionality.

7. A method as set forth in claim 1 wherein the carrier polyol is provided in an amount from 20 to 70 parts by weight per 100 parts by weight of the graft polyol, the polymerizable monomer is provided in an amount from 30 to 65 parts by weight per 100 parts by weight of the graft polyol, and the free radical initiator is provided in an amount from 0.2 to 1 parts by weight per 100 parts by weight of the polymerizable monomer.

8. A method as set forth in claim 1 wherein the chain transfer agent is provided in an amount from 0.4 to 2 parts by weight per 100 parts by weight of the polymerizable monomer.

9. A method as set forth in claim 1 wherein the step of combining the polymerizable monomer, the chain transfer agent, the carrier polyol, and the free radical initiator is further defined as combining at a temperature from 115°C to 150°C.

10. A method as set forth in claim 1 wherein the step of combining is further defined as combining the carrier polyol and the free radical initiator prior to combining the polymerizable monomer, the chain transfer agent, the carrier polyol, and the free radical initiator.

11. A method as set forth in claim 1 wherein the step of combining is further defined as combining the polymerizable monomer and the chain transfer agent prior to combining the polymerizable monomer, the chain transfer agent, the carrier polyol, and the free radical initiator.

12. A method as set forth in claim 1 further comprising the step of providing a macromer polyol different from the carrier polyol.

13. A method as set forth in claim 1 further comprising the step of providing a seed polyol different from the carrier polyol.

14. A method as set forth in claim 1 further comprising the step of separating the polymerizable monomer from the graft polyol.

15. A method as set forth in claim 1 wherein the chain transfer agent is 3-mercapto-1,2-propanediol, the polymerizable monomer comprises styrene and acrylonitrile, the carrier polyol comprises a polyether polyol, and the free radical initiator has azo functionality.

16. A method as set forth in claim 15 wherein the method further comprises the steps of providing a macromer polyol and a seed polyol, wherein the macromer polyol is different from the carrier polyol and the seed polyol, and the seed polyol is different from the macromer polyol and the carrier polyol.

17. A polyurethane article comprising the reaction product of an isocyanate component and a graft polyol formed from a method comprising the steps of:
a) providing a polymerizable monomer;
b) providing a chain transfer agent comprising;
1) from three to nine carbon atoms,
2) at least one thiol moiety, and
3) at least one hydrophilic moiety selected from the group of a hydroxyl moiety, an amine moiety, and a carboxyl moiety;
c) providing a carrier polyol;
d) providing a free radical initiator comprising free radicals;
e) combining said polymerizable monomer, said chain transfer agent, said carrier polyol, and said free radical initiator comprising said free radicals; and
f) reacting said polymerizable monomer and said free radicals to polymerize said polymerizable monomer and form said graft polyol.

18. A polyurethane article as set forth in claim 17 wherein said polymerizable monomer is provided in an amount from 30 to 65 parts by weight per 100 parts by weight of said graft polyol, said chain transfer agent is provided in an amount from 0.4 to 2 parts by weight per 100 parts by weight of said polymerizable monomer, said carrier polyol is provided in an amount from 20 to 70 parts by weight per 100 parts by weight of said graft polyol, and said free radical initiator is provided in an amount from 0.2 to 1 parts by weight per 100 parts by weight of said polymerizable monomer.

19. A polyurethane article as set forth in claim 17 wherein said polyurethane article comprises a foam.

20. A polyurethane article as set forth in claim 17 wherein the step of reacting said isocyanate component and said graft polyol is further defined as reacting said isocyanate component and said graft polyol at an isocyanate index from 95 to 130.

21. A graft polyol formed from a method comprising the steps of:
a) providing a polymerizable monomer;
b) providing a chain transfer agent comprising;
1) from three to nine carbon atoms,
2) at least one thiol moiety, and
3) at least one hydrophilic moiety selected from the group of a hydroxyl moiety, an amine moiety, and a carboxyl moiety;
c) providing a carrier polyol;
d) providing a free radical initiator comprising free radicals;
e) combining said polymerizable monomer, said chain transfer agent, said carrier polyol, and said free radical initiator comprising said free radicals; and
f) reacting said polymerizable monomer and said free radicals to polymerize said polymerizable monomer and form said graft polyol.

22. A graft polyol as set forth in claim 21 wherein said chain transfer agent is 3-mercapto-1,2-propanediol, said polymerizable monomer comprises styrene and acrylonitrile, said carrier polyol comprises a polyether polyol, and said free radical initiator comprises a diimide.

## Patentansprüche

1. Verfahren zur Bildung eines Pfropfpolyols, bei dem man:
a) ein polymerisierbares Monomer bereitstellt;
b) ein Kettenübertragungsmittel mit
1) drei bis neun Kohlenstoffatomen,
2) mindestens einer Thiolgruppierung und
3) mindestens einer hydrophilen Gruppierung, die unter einer Hydroxylgruppierung, einer Amingruppierung und einer Carboxylgrruppierung ausgewählt ist, bereitstellt;
c) ein Trägerpolyol bereitstellt;
d) einen Radikale umfassenden radikalischen Initiator bereitstellt;
e) das polymerisierbare Monomer, das Kettenübertragungsmittel, das Trägerpolyol und den die Radikale umfassenden radikalischen Initiator vereinigt und
f) das polymerisierbare Monomer und die Radikale zur Polymerisation des polymerisierbaren Monomers und zur Bildung des Pfropfpolyols umsetzt.

2. Verfahren nach Anspruch 1, bei dem man das Kettenübertragungsmittel aus der Gruppe bestehend aus Mercaptocarbonsäuren, Hydroxylmercaptanen, Aminomercaptanen, Carboxylsulfiden, Sulfidsäureanhydriden, Salzen davon und Kombinationen davon auswählt.

3. Verfahren nach Anspruch 2, bei dem es sich bei dem Kettenübertragungsmittel um 3-Mercauto-1,2-propandiol handelt.

4. Verfahren nach Anspruch 1, bei dem man das polymerisierbare Monomer aus der Gruppe bestehend aus Styrolen, Acryl- und Methacrylsäureestern, ethylenisch ungesättigten Nitrilen und Amiden und Kombinationen davon auswählt.

5. Verfahren nach Anspruch 1, bei dem man das Trägerpolyol aus der Gruppe bestehend aus Polyetherpolyolen, Polyesterpolyolen, Polycarbonatpolyolen und Kombinationen davon auswählt.

6. Verfahren nach Anspruch 1, bei dem der radikalische Initiator Azofunktionalität aufweiset.

7. Verfahren nach Anspruch 1, bei dem man das Trägerpolyol in einer Menge von 20 bis 70 Gewichtsteilen pro 100 Gewichtsteile des Pfropfpolyals bereitstellt, das polymerisierbare Monomer in einer Menge von 30 bis 65 Gewichtsteilen pro 100 Gewichtsteile des Pfropfpolyols bereitstellt und den radikalischen Initiator in einer Menge von 0,2 bis 1 Gewichtsteilen pro 100 Gewichtsteile des polymerisierbaren Monomers bereitstellt.

8. Verfahren nach Anspruch 1, bei dem man das Kettenübertragungsmittel in einer Menge von 0,4 bis 2 Gewichtsteilen pro 100 Gewichtsteile des polymerisierbaren Monomers bereitstellt.

9. Verfahren nach Anspruch 1, bei dem der Schritt des Vereinigens des polymerisierbaren Monomers, des Kettenübertragungsmittels, des Trägerpolyols und des radikalischen Initiators ferner als Vereinigen bei einer Temperatur von 115°C bis 150°C definiert ist.

10. Verfahren nach Anspruch 1, bei dem der Schritt des Vereinigens ferner als Vereinigen des Trägerpolyols und des radikalischen Initiators vor dem Vereinigen des polymerisierbaren Monomers, des Kettenübertragungsmittels, des Trägerpolyols und des radikalischen Initiators definiert ist.

11. Verfahren nach Anspruch 1, bei dem der Schritt des Vereinigen ferner als Vereinigen des polymerisierbaren Monomers und des Kettenübertragungsmittels vor dem Vereinigen des polymerisierbaren Monomers, des Kettenübertragungsmitteis des Trägerpolyols und des radikalischen Initiators definiert ist.

12. Verfahren nach Anspruch 1, bei dem man ferner ein Makromerpolyol, das von dem Trägerpolyol verschieden ist, bereitstellt.

13. Verfahren nach Anspruch 1, bei dem man ferner ein Saatpolyol, das von dem Trägerpolyol verschieden ist, bereitstellt.

14. Verfahren nach Anspruch 1, bei dem man ferner das polymerisierbare Monomer von dem Pfropfpolyol trennt.

15. Verfahren nach Anspruch 1, bei dem es sich bei dem Kettenübertragungsmittel um 3-Mercapto-1,2-propandiol handelt, das polymerisierbare Monomer Styrol und Acrylnitril umfaßt das Trägerpolyol ein Poletherpolyol umfaßt und der radikalische Initiator Azofunktionalität aufweist.

16. Verfahren nach Anspruch 15, bei dem man ferner ein Makromerpolyol und ein Saatpolyol bereitstellt, wobei das Makromerpolyol von dem Trägerpolyol und dem Saatpolyol verschieden ist und das Saatpolyol von dem Makromerpolyol und dem Trägerpolyol verschieden ist.

17. Polyurethangegenstand, umfassend das Umsetzungproduct einer Isocyanatkomponente und eines Pfropfpolyols, gebildet nach einem Verfahren, bei dem man:
a) ein polymerisierbares Monomer bereitstellt;
b) ein Kettenübertragungsmittel mit
1) drei bis neun Kohlenstoffatomen,
2) mindestens einer Thiolgruppierung und
3) mindestens einer hydrophilen Gruppierund, die unter einer Hydroxylgruppierung, einer Amidgruppierung und einer Carboxylgruppierung ausgewählt ist, bereitstellt;
c) ein Trägerpolyol bereitstellt;
d) einen Radikale umfassenden radikalischen Initiator bereitstellt;
e) das polymerisierbare Monomer, das Kettenübertragungsmittel, das Trägerpolyol und den die Radikale umfassenden radikalischen Initiator vereinigt und
f) das polymerisierbare Monomer und die Radikale zur Polymerisation des polymerisierbaren Monomers und zur Bildung des Pfropfpolyols umsetzt.

18. Polyurethangegenstand nach Anspruch 17, wobei das polymerisierbare Monomer in einer Menge von 30 bis 65 Gewichtsteilen pro 100 Gewichtsteile des Pfropfpolyols bereitgestellt wird, das Kettenübertragungsmittel in einer Menge von 0,4 bis 2 Gewichtsteilen pro 100 Gewichtsteile des polymerisierbaren Monomers bereitgestellt wird, das Trägerpolyol in einer Menge von 20 bis 70 Gewichtsteilen pro 100 Gewichtsteile des Pfropfpolyols bereitgestellt wird und der radikalische Initiator in einer Menge von 0,2 bis 1 Gewichtsteilen pro 100 Gewichtsteile des polymerisierbaren Monomers bereitgestellt wird.

19. Polyurethangegenstand nach Anspruch 17, wobei der Polyurethangegenstand einen Schaumstoff umfaßt.

20. Polyurethangegenstand nach Anspruch 17, wobei der Schritt des Umsetzens der Isocyanatkomponente und des Pfropfpolyols ferner als Umsetzen der Isocyanatkomponente und des Pfropfpolyols bei einem Isocyanat-Index von 95 bis 130 definiert ist.

21. Pfropfpolyol, gebildet nach einem Verfahren, bei dem man:
a) ein polymerisierbares Monomer bereitstellt;
b) ein Kettenübertragungsmittel mit
1) drei bis neun Kohlenstoffatomen,
2) mindestens einer Thiolgruppierung und
3) mindestens einer hydrophilen Gruppierung, die unter einer Hydroxylgruppierung, einer Amingruppierung und einer Carboxylgruppierung ausgewählt ist, bereitstellt;
c) ein Trägerpolyol bereitstellt;
d) einen Radikale umfassenden radikalischen Initiator bereitstellt;
e) das polymerisierbare Monomer, das Kettenübertragungsmittel, das Trägerpolyol und den die Radikale umfassenden radikalischen Initiator vereinigt und
f) das polymerisierbare Monomer und die Radikale zur Polymerisation des polymerisierbaren Monomers und zur Bildung des Pfropfpolyols umsetzt.

22. Pfropfpolyol nach Anspruch 21, wobei es sich bei dem Kettenübertragungsmittel um 3-Mercapto-1,2-propandiol handelt, das polymerisierbare Monomer Styrol und Acrylnitril umfaßt, das Trägerpolyol ein Polyetherpolyol umfaßt und der radikalische Initiator ein Diimid umfaßt.

## Revendications

1. Procédé de formation d'un polyol greffé, ledit procédé comprenant les étapes suivantes :
a) la mise à disposition d'un monomère polymérisable :
b) la mise à disposition d'un agent de transfert de chaîne qui comprend :
1) de trois à neuf atomes de carbone,
2) au moins une fraction thiol et
3) au moins une fraction hydrophile choisie dans le groupe d'une fraction hydroxyle, d'une fraction amine et d'une fraction carbonyle ;
c) la mise à disposition d'un polyol support ;
d) la mise à disposition d'un initiateur à radicaux libres comprenant des radicaux libres ;
e) la combinaison du monomère polymérisable, de l'agent de transfert de chaîne, du polyol support et de l'initiateur à radicaux libres comprenant les radicaux libres ; et
f) la mise en réaction du monomère polymérisable et des radicaux libres pour polymériser le monomère polymérisable et former le polyol greffé,

2. Procédé selon la revendication 1, dans lequel l'agent de transfert de chaîne est choisi dans le groupe des acides mercaptocarboxyliques, des hydroxylmercaptans, des aminomercaptans, des sulfures de carboxyl, des anhydrides de l'acide sulfhydrique, leurs sels et leurs combinaisons.

3. Procédé selon la revendication 2, dans lequel l'agent de transfert de chaîne est le 3-mercapto-1,2-propanediol.

4. Procédé selon la revendication 1, dans lequel le monomère polymérisable est choisi dans le groupe des styrènes, des esters des acides acryliques et méthacrylique, des nitriles et amides éthyléniquement insaturés, et leurs combinaisons.

5. Procédé selon la revendication 1, dans lequel le polyol support est choisi dans le groupe des polyéther polyols, des polyester polyols, des polycarbonate polyols, et leurs combinaison.

6. Procédé selon la revendication 1, dans lequel l'initiateur à radicaux libres a une fonctionnalité azo.

7. Procédé selon la revendication 1, dans lequel le polyol support est utilisé en une quantité de 20 à 70 parties en poids pour 100 parties en poids du polyol greffé, le monomère polymérisable est utilisé en une quantité de 30 à 65 parties en poids pour 100 parties en poids du polyol greffé, et l'initiateur à radicaux libres est utilisé en une quantité de 0,2 à 1 partie en poids pour 100 parties en poids du monomère polymérisable.

8. Procédé selon la revendication 1, dans lequel l'agent de transfert de chaîne est utilisé en une quantité de 0,4 à 2 parties en poids pour 100 parties en poids du monomère polymérisable.

9. Procédé selon la revendication 1, dans lequel l'étape de combinaison du monomère polymérisable, de l'agent de transfert de chaîne, du polyol support et de l'initiateur à radicaux libres est également définie comme une combinaison à une température de 115 °C à 150 °C.

10. Procédé selon la revendication 1, dans lequel l'étape de combinaison est également définie comme une combinaison du polyol support et de l'initiateur à radicaux libres avant la combinaison du monomère polymérisable, de l'agent de transfert de chaîne, du polyol support et de l'initiateur à radicaux libres.

11. Procédé selon la revendication 1, dans lequel l'étape de combinaison est également définie comme une combinaison du monomère polymérisable et de l'agent de transfert de chaîne avant la combinaison du monomère polymérisable, de l'agent de transfert de chaîne, du polyol support et de l'initiateur à radicaux libres.

12. Procédé selon la revendication 1, comprenant également l'étape de mise à disposition d'un polyol macromère différent du polyol support.

13. Procédé selon la revendication 1, comprenant également l'étape de mise à disposition d'un polyol germe différent du polyol support.

14. Procédé selon la revendication 1, comprenant également l'étape de séparation du monomère polymérisable du polyol greffé.

15. Procédé selon la revendication 1, dans lequel l'agent de transfert de chaîne est le 3-mercapto-1,2-propanediol, le monomère polymérisable comprend du styrène et de l'acrylonitrile, le polyol support comprend un polyéther polyol, et l'initiateur à radicaux libres a une fonctionnalité azo.

16. Procédé selon la revendication 15, dans lequel le procédé comprend également les étapes de mise à disposition d'un polyol macromère et d'un polyol germe, le polyol macromère étant différent du polyol support et du polyol germe, et le polyol germe étant différent du polyol macromère et du polyol support.

17. Article en polyuréthane comprenant le produit de réaction d'un composant isocyanate et d'un polyol greffé formé par un procédé comprenant les étapes suivantes :
a) la mise à disposition d'un monomère polymérisable ;
b) la mise à disposition d'un agent de transfert de chaîne qui comprend :
1) de trois à neuf atomes de carbone,
2) au moins une fraction thiol et
3) au moins une fraction hydrophile choisie dans le groupe d'une fraction hydroxyle, d'une fraction amine et d'une fraction carboxyle ;
c) la mise à disposition d'un polyol support ;
d) la mise à disposition d'un initiateur à radicaux libres comprenant des radicaux libres ;
e) la combinaison dudit monomère polymérisable, dudit agent de transfert de chaîne, dudit polyol support et dudit initiateur à radicaux libres comprenant lesdits radicaux libres ; et
f) la mise en réaction dudit monomère polymérisable et desdits radicaux libres pour polymériser ledit monomère polymérisable et former ledit polyol greffé.

18. Article en polyuréthane selon la revendication 17, dans lequel ledit monomère polymérisable est utilisé en une quantité de 30 à 65 parties en poids pour 100 parties en poids dudit polyol greffé, ledit agent de transfert de chaîne est utilisé en une quantité de 0,4 à 2 parties en poids pour 100 parties en poids dudit monomère polymérisable, ledit polyol support est utilisé en une quantité de 20 à 70 parties en poids pour 100 parties en poids dudit polyol greffé, et ledit initiateur à radicaux libres est utilisé en une quantité de 0,2 à 1 partie en poids pour 100 parties en poids dudit monomère polymérisable.

19. Article en polyuréthanne selon la revendication 17, dans lequel ledit article en polyuréthanne comprend une mousse.

20. Article en polyuréthane selon à revendication 17, dans lequel l'étape de mise en réaction dudit; composant isocyanate et dudit polyol greffé est également définie comme la mise en réaction dudit composant isocyanate et dudit polyol greffé à un indice d'isocyanate de 95 à 130.

21. Polyol greffé formé par un procédé comprenant les étapes suivantes :
a) la mise à disposition d'un monomère polymérisable ;
b) la mise à disposition d'un agent de transfert de chaîne qui comprend :
1) de trois à neuf atomes de carbone,
2) au moins une fraction thiol et
3) au moins une fraction hydrophile choisie dans le groupe d'une fraction hydroxyle, d'une fraction amine et d'une fraction carboxyle ;
c) la mise à disposition d'un polyol support ;
d) la mise à disposition d'un initiateur à radicaux libres comprenant des radicaux libres ;
e) la combinaison dudit monomère polymérisable, dudit agent de transfert de chaîne, dudit polyol support et dudit initiateur à radicaux libres comprenant lesdits radicaux libres ; et
f) la mise en réaction dudit monomère polymérisable et desdits radicaux libres pour polymériser ledit monomère polymérisable et former ledit polyol greffé.

22. Polyol greffé selon la revendication 21, dans lequel ledit agent de transfert de chaîne est le 3-mercapto-l,2-propanediol, ledit monomère polymérisable comprend du styrène et de l'acrylonitrile, ledit polyol support comprend un polyether polyol, et ledit initiateur à radicaux libres comprend un diimide.
